# FASCICULE DE BREVET EUROPEEN

(11) **EP 2 713 081 B1**
(45) Date de publication et mention de la délivrance du brevet: **16.09.2015**
(21) Numéro de dépôt: 13185371.5
(22) Date de dépôt: 20.09.2013
(51) Int. Cl.: F16J 15/06, F16J 15/10, F16J 15/16, F16J 15/32, F16J 15/34

(54) **Joint annulaire, et moule de fabrication d'un tel joint**
Ringförmige Dichtung, und Herstellungsform für eine solche Dichtung
Ring joint and mould for manufacturing such a joint

(30) Priorité: 26.09.2012 FR 1259053
(43) Date de publication de la demande: 02.04.2014
(73) Titulaire: LE JOINT FRANCAIS SNC, 75008 Paris (FR)
(72) Inventeur: Onillon, Michaël, 85590 ST MALO DU BOIS (FR); Lemiere, Christophe, 49770 LA MEMBROLLE SUR LONGUENEE (FR); Cheynet, Joseph, 53200 CHATEAU-GONTIER (FR); Giffard, Etienne, 53200 AMPOIGNE (FR)
(74) Mandataire: Bolinches, Michel Jean-Marie

(56) Documents cités:
- EP-A1- 1 750 042
- US-A1- 2006 012 070
- US-A1- 2011 227 295

## Description

L'invention concerne un joint annulaire, tel qu'un joint torique, ainsi qu'un moule de fabrication d'un tel joint.

Les joints annulaires et, en particulier les joints toriques, sont utilisés pour de très nombreuses applications. Il en existe de toutes dimensions.

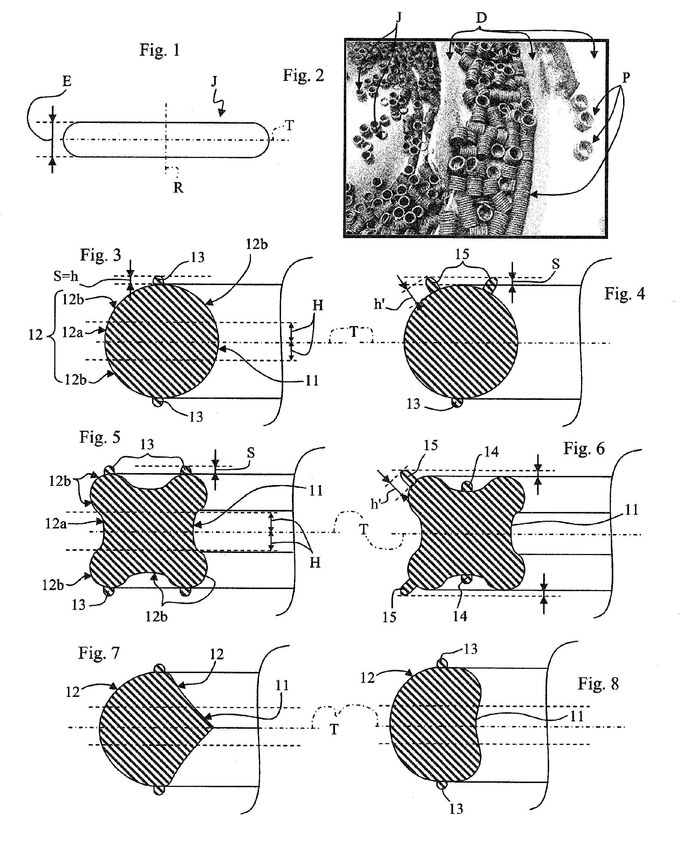

Comme le montre la figure 1, les joints annulaires se caractérisent par un profil constitué de deux faces planes longitudinales de part et d'autre du plan de joint P, reliées par deux bords transversaux courbes ou plans. En coupe, les joints annulaires présentent des parties pleines et des parties vides. Par exemple, pour un joint torique classique, les parties pleines présentent une coupe circulaire. Il existe une multitude de formes de joints annulaire comme, par exemple des joints quadrilobes ou des joints dits « en D » dont les parties pleines présentent une coupe en D tournée vers l'intérieur ou l'extérieur selon l'application du joint.

Pour certaines applications, les joints annulaires sont livrés lubrifiés. Ceci permet de réduire les efforts d'assemblage du joint lors de son montage.

Généralement, dans l'industrie, les joints annulaires, lubrifiés ou non, sont livrés en vrac puis sont distribués aux utilisateurs et aux machines automatiques d'assemblage par des systèmes automatisés de types bols ou rails vibrants.

En pratique, on constate que les joints adhèrent aux parois du distributeur et/ou s'agrègent entre eux, ce qui ralenti leur distribution. Ceci est illustré en figure 2 qui est une photo d'un distributeur D de joints toriques classiques J dans lequel les joints sont agrégés entre eux par paquets P.

Pour les joints lubrifiés, ces phénomènes sont dus à la tension superficielle du lubrifiant employé qui génère des forces de capillarité entre les joints et/ou les parois du distributeur. En outre, le lubrifiant encrasse les distributeurs. Avec le temps, les joints arrivant dans ces distributeurs peuvent adhérer de plus en plus aux parois. Il est alors nécessaire de nettoyer très régulièrement les distributeurs.

Pour les joints non lubrifiés, ces phénomènes sont dus au fait que les frottements des joints entre eux et/ou avec les parois du distributeur chargent les joints en électricité statique. Les joints s'agrègent entre eux et/ou adhèrent aux parois du distributeur par attraction électrostatique.

A la sortie du distributeur, l'utilisateur voit donc arriver des paquets de joints qu'il doit défaire avant de pouvoir retirer un seul joint. Cette opération l'oblige à utiliser (et donc salir dans le cas des joints lubrifiés) ses deux mains, alors qu'idéalement, l'utilisateur doit pouvoir prendre individuellement les joints d'une seule main. Pour une machine le phénomène est encore plus problématique puisque cette dernière s'arrête pour que du personnel d'entretien défasse les paquets de joints et relance la machine.

Les cadences d'assemblages et les conditions de travail des utilisateurs sont donc affectées par ces problèmes de colmatage des distributeurs et d'agrégation des joints.

L'objectif de la présente invention est de proposer un joint annulaire, pouvant être lubrifié, permettant une distribution automatique dans des distributeurs, sans risquer de colmater les distributeurs ni de s'agréger avec d'autres joints.

La Figure 1 montre un joint annulaire selon le préambule de la revendication 1.

Le document US 2011/0227295 décrit un joint annulaire comportant des excroissances sur la surface de contact, mais ces excroissances visent à améliorer l'étanchéité du joint dans certaines conditions d'usage. Le problème de la manutention du joint, notamment d'éviter l'agglomération des joints entre eux, est absent de ce document.

A cette fin, l'invention propose de munir la surface du joint de protubérances ponctuelles (c'est-à-dire non annulaire et présentant une emprise sur le joint négligeable par rapport à la surface totale du joint, c'est-à-dire inférieure ou égale à 1%).

A cette fin, l'invention a pour objet un joint annulaire, en matériau déformable élastiquement, comprenant un plan de joint à mi épaisseur et un axe de révolution perpendiculaire au plan de joint, et présentant :
- une surface dite « intérieure », tournée vers l'axe de révolution, et s'étendant sur une hauteur comprise entre 1/6 et 22/50 de l'épaisseur de part et d'autre du plan de joint, et
- une surface dite « de contact » s'étendant sur le reste du joint,

caractérisé en ce qu'il comprend, sur la surface de contact au moins une protubérance ponctuelle.

Selon d'autres modes de réalisation :
- la surface intérieure peut s'étendre sur une hauteur comprise de préférence entre 1/5 et 2/5 de l'épaisseur de part et d'autre du plan de joint, avantageusement entre 1/3 et 2/5 de l'épaisseur de part et d'autre du plan de joint ;
- ladite au moins une protubérance peut présenter une hauteur comprise entre 0,2% et 15% de l'épaisseur du joint, de préférence entre 0,3% et 10% de l'épaisseur du joint, avantageusement entre 0,5% et 5% de l'épaisseur du joint, typiquement entre 1 % et 3% de l'épaisseur du joint ;
- la surface de contact peut présenter au moins trois protubérances ponctuelles de part et d'autre de l'axe de plan de joint ;
- les protubérances ponctuelles peuvent être en saillie par rapport au joint vu en projection orthogonale au plan de joint ;
- la surface de contact peut comprendre trois zones :
   - une zone dite « extérieure » à l'opposé de la surface intérieure par rapport au joint, et s'étendant sur une hauteur comprise entre 1/6 et 22/50 de l'épaisseur du joint de part et d'autre du plan de joint, de préférence entre 1/5 et 2/5 de l'épaisseur de part et d'autre du plan de joint, avantageusement entre 1/3 et 2/5 de l'épaisseur de part et d'autre du plan de joint ;
   - deux zones dites « latérales » situées de part et d'autre du plan de joint et s'étendant chacune entre la zone extérieure et la surface intérieure,
   - la ou les protubérances étant situées sur les zones latérales.
- les protubérances peuvent être agencées perpendiculairement au plan de joint ;
- la surface intérieure et la surface de contact peuvent être lubrifiées ;
- les protubérances ponctuelles peuvent avoir une forme choisie parmi les formes hémisphérique, pyramidale, conique, tronconique, ou polyédrique ; et/ou
- le joint annulaire peut présenter une symétrie par rapport au plan de joint.

L'invention concerne également un moule de fabrication d'un joint comprenant un plan de joint à mi épaisseur et un axe de révolution perpendiculaire au plan de joint, et présentant :
- une surface dite « intérieure », tournée vers l'axe de révolution, et s'étendant sur une hauteur comprise entre 1/6 et 22/50 de l'épaisseur de part et d'autre du plan de joint, et
- une surface dite « de contact » s'étendant sur le reste du joint, caractérisé en ce que le moule comprend au moins une première et une deuxième matrice, mobiles l'une par rapport à l'autre, comportant au moins une cavité localisée de telle sorte qu'en utilisation, au moins une protubérance ponctuelle soit localisée sur la surface de contact du joint.

L'invention concerne également une utilisation de joints précédents avec au moins une machine de distribution automatique de joints annulaires munie d'au moins un distributeur automatique.

L'invention concerne également un procédé de distribution automatique de joints annulaires en vrac dans une machine munie d'un distributeur automatique, comprenant :
(a) la fourniture en vrac de joints annulaires en amont du distributeur ; et
(b) le déplacement des joints annulaires vers l'aval du distributeur, dans lequel l'étape (a) consiste à fournir des joints annulaires précédents.

De préférence, le distributeur est choisi parmi un distributeur par gravité, un distributeur vibrant, un distributeur par force centrifuge, un convoyeur à bande ou convoyeur à godets.

D'autres caractéristiques de l'invention ressortiront de la description détaillée ci-après faite en référence aux dessins annexés qui représentent, respectivement :
- la figure 1, une vue schématique en projection orthogonale au plan de joint d'un joint torique classique ;
- la figure 2, une photo d'un distributeur de joints toriques classique dans lequel les joints sont agrégés entre eux par paquets ;
- la figure 3, une vue schématique en coupe partielle, orthogonale au plan de joint, d'un mode de réalisation d'un joint torique selon l'invention ;
- la figure 4, une vue schématique en coupe partielle, orthogonale au plan de joint, illustrant différentes alternatives possibles d'un joint torique selon l'invention ;
- la figure 5, une vue schématique en coupe partielle, orthogonale au plan de joint, d'un mode de réalisation d'un joint quadrilobe selon l'invention ;
- la figure 6, une vue schématique en coupe partielle, orthogonale au plan de joint, illustrant différentes alternatives possibles d'un joint quadrilobe selon l'invention.
- la figure 7, une vue schématique en coupe partielle, orthogonale au plan de joint, d'un mode de réalisation d'un joint auto maintenu selon l'invention ;
- la figure 8, une vue schématique en coupe partielle, orthogonale au plan de joint, d'un mode de réalisation d'un joint en D selon l'invention ;
- la figure 9, une vue schématique en perspective d'un joint torique selon l'invention ;
- la figure 10, une vue schématique en projection orthogonale au plan de joint du joint de la figure 9 reposant sur une surface ; et
- la figure 11, un graphique illustrant l'évolution dans le temps de la cadence de distribution de joints toriques classiques et de joints toriques selon l'invention.

Les figures 1 et 2 illustrent l'état de la technique.

Un premier mode de réalisation d'un joint selon l'invention est illustré en figure 3.

Le joint annulaire 10 comprend un plan de joint T et un axe de révolution R (non représenté) perpendiculaire au plan de joint T. Le joint 10 présente une épaisseur E déterminée. L'épaisseur E d'un joint annulaire est mesurée classiquement entre les deux tangentes au joint parallèles au plan de joint T.

Le plan de joint T considéré est situé à mi épaisseur du joint. Autrement dit, la hauteur maximale du joint mesurée à partir du plan de joint est égale à E/2.

Le joint 10 présente :
- une surface 11 dite « intérieure », tournée vers l'axe de révolution R, et s'étendant sur une hauteur H comprise entre 1/6 et 22/50 de l'épaisseur E de part et d'autre du plan de joint T, et
- une surface 12 dite « de contact » s'étendant sur le reste du joint.

En d'autres termes, la surface intérieure 11 s'étend sur la partie du joint tournée vers l'axe de révolution R et sur une hauteur totale 2H comprise entre 1/3 (c'est-à-dire 1/6+1/6) et 44/50 (c'est-à-dire 22/50+22/50). La surface de contact 12 s'étend donc, d'une part, sur la partie du joint tournée vers l'axe de révolution R et sur une hauteur totale 2H comprise entre 1/3 (c'est-à-dire 1/2-1/6) et 3/50 (c'est-à-dire 1/2-22/50), et d'autre part sur toute la partie opposé à la surface intérieure par rapport au joint.

Conformément à l'invention, le joint 10 comprend, sur la surface de contact 12 au moins une protubérance ponctuelle 13.

Par « ponctuelle », on entend que la protubérance n'est pas continue ou annulaire. Elle présente une surface projetée sur le joint restreinte par rapport à la surface totale du joint. Ceci permet de diminuer la surface de contact des joints entre eux et avec le distributeur.

La ou les protubérances ponctuelles ont une forme choisie parmi les formes hémisphérique, pyramidale, conique, tronconique, ou polyédrique. Pour une protubérance hémisphérique, sa largeur est deux fois plus grande que sa hauteur.

Bien entendu, les protubérances ponctuelles selon l'invention sont sans commune mesure par rapport aux lèvres ou aux lobes prévus sur certains joint et qui en constitue des parties fonctionnelles, c'est-à-dire des parties intervenant dans l'étanchéité du joint.

La ou les protubérances ponctuelles 13 présentent une hauteur h comprise entre 0,2% et 15% de l'épaisseur E du joint 10.

La hauteur de la protubérance dépend du matériau utiliser pour fabriquer le joint et, le cas échéant, de la tension superficielle du lubrifiant employé.

En effet, la hauteur minimum du joint doit prendre en compte l'écrasement du joint sous son propre poids pour éviter que les protubérances ne soient totalement comprimées sous le simple poids du joint. En outre, les protubérances doivent être suffisamment hautes pour assurer un écartement du joint d'un autre joint et/ou de la surface des distributeurs, malgré la présence de lubrifiant. En d'autres termes, le lubrifiant, du fait de sa tension superficielle, ne doit pas pouvoir occuper tout l'espace situé entre les protubérances, la surface de contact du joint et l'autre joint ou la surface du distributeur.

De préférence la ou les protubérances ponctuelles 13 présentent une hauteur h comprise entre 0,3% et 10% de l'épaisseur E du joint, avantageusement entre 0,5% et 5% de l'épaisseur E du joint, typiquement entre 1 % et 3% de l'épaisseur E du joint.

Bien qu'une seule protubérance 13 suffise à écarter le joint d'un autre joint ou de la surface du distributeur, la présence d'au moins trois protubérances ponctuelles de part et d'autre de l'axe de plan de joint T apporte une amélioration très sensible des résultats.

Pour les joint toriques (figures 3 et 4), les joints auto maintenus (figure 7) et les joints en D (figure 8), les protubérances ponctuelles sont conformées pour être en saillie S par rapport au joint vu en projection orthogonale au plan de joint T. Autrement dit, la tangente (illustrée en pointillée sur les figures 3, 4, 7 et 8) aux protubérances, parallèle au plan de joint T, est située à une distance S de la tangente à la surface de contact du joint, parallèle au plan de joint T.

Pour les joints quadrilobes (figures 5 et 6), les protubérances ponctuelles peuvent également être conformées pour être en saillie S par rapport au joint vu en projection orthogonale au plan de joint T. Alternativement ou en combinaison, un joint quadrilobe selon l'invention peut comprendre une ou plusieurs protubérances 14 disposées entre deux lobes situés du même côté du joint par rapport au plan de joint T.

Ces protubérances 14 évitent aux lobes d'un autre joint de s'insérer entre les lobes du joint qui les porte, sans qu'il soit nécessaire que les protubérances 14 soient en saillie par rapport au joint vu en projection orthogonale au plan de joint T.

Pour limiter la quantité de matière employée tout en évitant aux joints de s'agglutiner entre eux ou de se coller aux parois des distributeurs, la ou les protubérances sont circonscrites à des zones localisées.

Ainsi, on peut définir trois zones sur la surface de contact 12 :
- une zone 12a, dite « extérieure », située à l'opposé de la surface intérieure par rapport au joint, et s'étendant sur une hauteur H comprise entre 1/6 et 22/50 de l'épaisseur E du joint de part et d'autre du plan de joint T, de préférence entre 1/5 et 2/5 de l'épaisseur E de part et d'autre du plan de joint T, avantageusement entre 1/3 et 2/5 de l'épaisseur E de part et d'autre du plan de joint T ;
- deux zones 12b, dites « latérales », situées de part et d'autre du plan de joint T et s'étendant chacune entre la zone extérieure et la surface intérieure.

Autrement dit, chaque zone latérale s'étend de part et d'autre du plan de joint T, sur une hauteur comprise entre 1/3 et 3/50 de l'épaisseur E du joint. En d'autres termes, les zones latérales sont situées aux sommets du joint, dans le tiers supérieur et le tiers inférieur sur la figure 3, le tiers médian étant occupé par la surface intérieure et la zone extérieure.

Plus la surface intérieure et la zone extérieure sont étendues (jusqu'à 22/50^{ème} de l'épaisseur E), plus les zones latérales sont restreintes (jusqu'à 3/50^{ème}) et se situent proches de la tangente au joint parallèle au plan de joint T.

De préférence, les protubérances 13-14 sont disposées sur les zones latérales 12b.

Avantageusement les protubérances 13-14 sont agencées perpendiculairement par rapport au plan de joint T (figures 3 à 8). Alternativement ou en combinaison, le joint 10 porte des protubérances 15 formant un angle α avec le plan de joint T. Dans ce cas, la hauteur h' des protubérances 15 est supérieure à la hauteur h des protubérances 13-14 de manière à ce qu'elles soient en saillie S par rapport au joint vu en projection orthogonale au plan de joint T.

Ceci permet de réduire les efforts d'écrasement parallèlement à l'axe de révolution R du joint lors de son montage, car les protubérances peuvent fléchir, tout en assurant que les joints ne s'agglutinent pas entre eux ou se collent à la paroi des distributeurs.

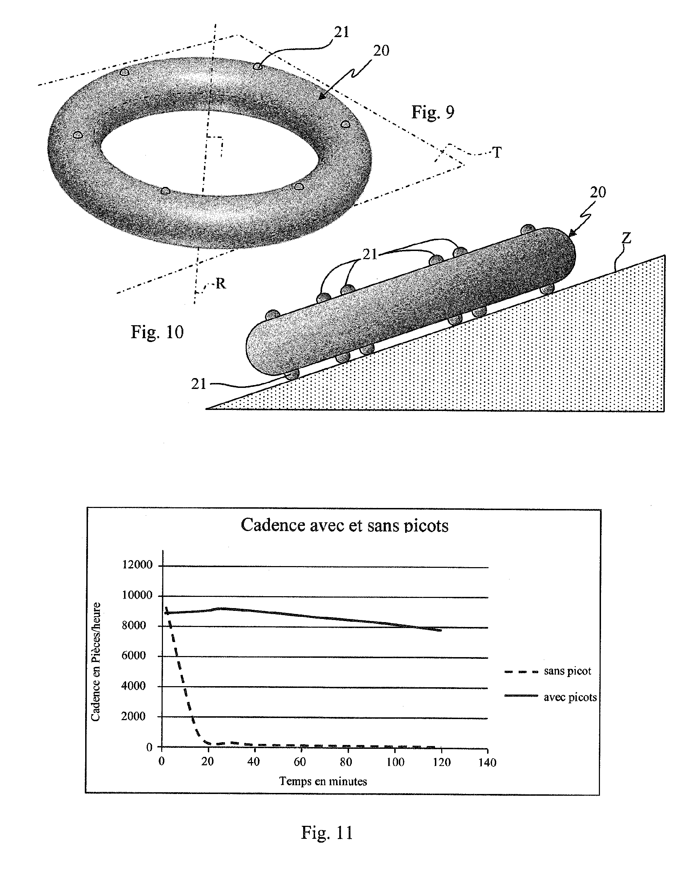

Un exemple de réalisation d'un joint torique selon l'invention est illustré en figure 9. Le joint torique 20 est en EPDM (éthylène-propylène-diène monomère) et mesure 7,65 mm de diamètre, et 1,78 mm d'épaisseur E (l'épaisseur E est ici égale au diamètre du tore). Le joint 20 a été réalisé avec six protubérances 21 disposées perpendiculairement au plan de joint T à une hauteur H égale à E/2 (+ou- 0,05 mm). En effet, chaque protubérance 21 est hémisphérique et présente une hauteur de 0,05 mm et donc une emprise sur le joint de 0,1 mm (2*0.05mm).

Les protubérances ponctuelles 21 sont en saillie S par rapport au joint vu en projection orthogonale au plan de joint T, de sorte que lorsque ce joint est posé sur une surface plane Z (figure 10), il n'est en contact avec cette surface Z que par l'intermédiaire des protubérances ponctuelles 21.

Le joint est avantageusement lubrifié, par exemple avec une huile à base de silicone.

Des tests de mesures de cadence ont été menés avec des joints toriques selon l'invention (munis de protubérances) en comparaison avec des joints toriques classiques (dépourvus de protubérances).

Les mesures de cadence ont été réalisées dans un distributeur constitué d'un bol vibrant équipé d'une cellule de comptage en sortie de bol pour mesurer la cadence en sortie du bol. La cadence est exprimée en pièces par heure.

Les résultats sont illustrés dans le graphique de la figure 11.

Sans protubérance (ligne en pointillés sur la figure 11), la cadence de distribution se dégrade avec le temps : les joints s'agrègent entre eux, ou se collent au distributeur, de sorte qu'en 20 minutes, la cadence passe de 9000 pièces par heure à moins d'une centaine par heure.

Avec les protubérances (ligne continue sur la figure 11), les joints ne s'agrègent pas et ne se collent pas à la paroi du distributeur. La cadence n'a pas diminuée au bout de 20 minutes. Après deux heures de fonctionnement, la cadence n'a diminué que de 10 % environ.

L'invention permet donc le maintien de la cadence et limite le nombre de nettoyage des distributeurs, faisant économiser ainsi du temps et des produits d'entretien.

D'autres essais ont été menés avec des joints en EPDM de tailles différentes: 20 mm de diamètre et de 2,62 mm d'épaisseur E.

La cadence de distribution est également améliorée par rapport à des joints de même taille mais sans protubérance.

Ainsi, d'une manière générale, le distributeur s'encrasse beaucoup moins vite puisque la surface de contact entre les joints et entre chaque joint et le distributeur est beaucoup plus faible.

En disposant des protubérances ponctuelles à la surface du joint, l'invention va donc à l'encontre du préjugé selon lequel la surface du joint doit être la plus lisse possible pour assurer la meilleure étanchéité possible. En effet, les moules classiquement utilisés sont le plus lisses possibles, et il existe de nombreux procédés visant à supprimer toute imperfection involontaire ou inévitables issue du moulage, telle que les bavures de plan de joint.

Au contraire de cette pratique, l'invention prévoit que le moule de fabrication du joint comprend au moins une première et une deuxième matrice, mobiles l'une par rapport à l'autre, comportant au moins une cavité localisée de telle sorte qu'en utilisation, au moins une protubérance ponctuelle soit localisée sur la surface de contact du joint.

Avantageusement, les ou les cavités sont localisées au niveau des zones latérales du joint.

Malgré la présence des protubérances ponctuelles, les joints selon l'invention assurent leur fonction principale d'étanchéité

Selon d'autres caractéristiques de l'invention, le joint annulaire peut présenter ou non une symétrie par rapport au plan de joint T.

L'invention concerne également l'utilisation de joints précédemment décrits et munis de protubérances ponctuelles sur la surface de contact, avec une machine de distribution automatique de joints annulaires munie d'au moins un distributeur automatique de type toboggan, bol ou rail vibrant, bol centrifuge, convoyeur à bandes ou à godets.

D'une manière plus générale, le distributeur est un distributeur par gravité, un distributeur vibrant, un distributeur par force centrifuge, ou un convoyeur mécanique (à bande ou à godets).
Ces types de machines sont par exemple vendu par les sociétés BERNAY AUTOMATION, CERMA'C ou TECHNIMODERN AUTOMATION

L'invention concerne également un procédé de distribution automatique de joints annulaires en vrac est mis en oeuvre dans une machine munie d'un distributeur automatique, comprenant :
(a) la fourniture en vrac de joints annulaires en amont du distributeur ; et
(b) le déplacement des joints annulaires vers l'aval du distributeur,
l'étape (a) consistant à fournir des joints annulaires selon l'invention.

Grâce au joint selon l'invention, la distribution est plus facile car les joints s'agrègent beaucoup moins entre eux et n'adhèrent quasiment pas au distributeur.

Les cadences de montage des joints s'en trouvent accélérées car il n'est plus nécessaire d'arrêter les robots de montage pour dissocier les paquets de joints.

## Revendications

1. Joint annulaire (10) d'épaisseur (E), en matériau déformable élastiquement, comprenant un plan de joint (T) à mi épaisseur et un axe de révolution (R) perpendiculaire au plan de joint (T), et présentant :
• une surface dite « intérieure », tournée vers l'axe de révolution, et s'étendant sur une hauteur (H) comprise entre 1/6 et 22/50 de l'épaisseur (E) de part et d'autre du plan de joint (T), et
• une surface dite « de contact » s'étendant sur le reste du joint, **caractérisé en ce qu'**il comprend, sur la surface de contact au moins une protubérance ponctuelle.

2. Joint annulaire selon la revendication 1, dans lequel la surface intérieure s'étend sur une hauteur (H) comprise de préférence entre 1/5 et 2/5 de l'épaisseur (E) de part et d'autre du plan de joint (T), avantageusement entre 1/3 et 2/5 de l'épaisseur (E) de part et d'autre du plan de joint (T).

3. Joint annulaire selon l'une quelconque des revendications 1 ou 2, dans lequel ladite au moins une protubérance présente une hauteur (h) comprise entre 0,2% et 15% de l'épaisseur (E) du joint, de préférence entre 0,3% et 10% de l'épaisseur (E) du joint, avantageusement entre 0,5% et 5% de l'épaisseur (E) du joint, typiquement entre 1 % et 3% de l'épaisseur (E) du joint.

4. Joint annulaire selon l'une quelconque des revendications 1 à 3, dans lequel la surface de contact présente au moins trois protubérances ponctuelles de part et d'autre de l'axe de plan de joint (T).

5. Joint annulaire selon l'une quelconque des revendications 1 à 4, dans lequel les protubérances ponctuelles sont en saillie par rapport au joint vu en projection orthogonale au plan de joint (T).

6. Joint annulaire selon l'une quelconque des revendications 1 à 5, dans lequel la surface de contact comprend trois zones :
• une zone dite « extérieure » à l'opposé de la surface intérieure par rapport au joint, et s'étendant sur une hauteur comprise entre 1/6 et 22/50 de l'épaisseur (E) du joint de part et d'autre du plan de joint (T), de préférence entre 1/5 et 2/5 de l'épaisseur (E) de part et d'autre du plan de joint (T), avantageusement entre 1/3 et 2/5 de l'épaisseur (E) de part et d'autre du plan de joint (T) ;
• deux zones dites « latérales » situées de part et d'autre du plan de joint (T) et s'étendant chacune entre la zone extérieure et la surface intérieure,
la ou les protubérances étant situées sur les zones latérales.

7. Joint annulaire selon la revendication 6, dans lequel les protubérances sont agencées perpendiculairement au plan de joint (T).

8. Joint annulaire selon l'une quelconque des revendications 1 à 7, dans lequel la surface intérieure et la surface de contact sont lubrifiées.

9. Joint annulaire selon l'une quelconque des revendications 1 à 8, dans lequel les protubérances ponctuelles ont une forme choisie parmi les formes hémisphérique, pyramidale, conique, tronconique, ou polyédrique.

10. Joint annulaire selon l'une quelconque des revendications 1 à 9, présentant une symétrie par rapport au plan de joint (T).

11. Moule de fabrication d'un joint comprenant un plan de joint (T) à mi épaisseur et un axe de révolution (R) perpendiculaire au plan de joint (T), et présentant :
• une surface dite « intérieure », tournée vers l'axe de révolution, et s'étendant sur une hauteur (H) comprise entre 1/6 et 22/50 de l'épaisseur (E) de part et d'autre du plan de joint (T), et
• une surface dite « de contact » s'étendant sur le reste du joint, **caractérisé en ce que** le moule comprend au moins une première et une deuxième matrice, mobiles l'une par rapport à l'autre, comportant au moins une cavité localisée de telle sorte qu'en utilisation, au moins une protubérance ponctuelle soit localisée sur la surface de contact du joint.

12. Utilisation de joints selon l'une quelconque des revendications 1 à 10 avec au moins une machine de distribution automatique de joints annulaires munie d'au moins un distributeur automatique.

13. Procédé de distribution automatique de joints annulaires en vrac dans une machine munie d'un distributeur automatique, comprenant :
(a) la fourniture en vrac de joints annulaires en amont du distributeur ; et
(b) le déplacement des joints annulaires vers l'aval du distributeur, **caractérisé en ce que** l'étape (a) consiste à fournir des joints annulaires selon l'une quelconque des revendications 1 à 10.

14. Procédé de distribution automatique selon la revendication précédente, dans lequel le distributeur est choisi parmi un distributeur par gravité, un distributeur vibrant, un distributeur par force centrifuge, un convoyeur à bande ou convoyeur à godets.

## Patentansprüche

1. Ringförmige Dichtung (10) mit Dicke (E), aus einem elastisch verformbaren Material, welche eine Dichtungsebene (T) bei halber Dicke und eine Rotationsachse (R) senkrecht zu der Dichtungsebene (T) umfasst und aufweist:
• eine "innere Oberfläche" genannte Oberfläche, welche in Richtung der Rotationsachse gewandt ist und sich über eine Höhe (H) erstreckt, welche zwischen 1/6 und 22/50 der Dicke (E) auf beiden Seiten der Dichtungsebene (T) enthalten ist, und
• eine "Kontaktoberfläche" genannte Oberfläche, welche sich über den Rest der Dichtung erstreckt,
dadurch gekennzeichet, dass sie auf der Kontaktoberfläche wenigstens einen punktuellen Vorsprung umfasst.

2. Ringförmige Dichtung nach Anspruch 1, wobei die innere Oberfläche sich über eine Höhe (H) erstreckt, welche bevorzugt zwischen 1/5 und 2/5 der Dicke (E) auf beiden Seiten der Dichtungsebene (T), vorteilhafterweise zwischen 1/3 und 2/5 der Dicke (E) auf beiden Seiten der Dichtungsebene (T) enthalten ist.

3. Ringförmige Dichtung nach einem der Ansprüche 1 oder 2, wobei der wenigstens eine Vorsprung eine Höhe (h) aufweist, welche zwischen 0,2% und 15% der Dicke (E) der Dichtung, vorteilhafterweise zwischen 0,5% und 5% der Dicke (E) der Dichtung, typischerweise zwischen 1% und 3% der Dicke (E) der Dichtung enthalten ist.

4. Ringförmige Dichtung nach einem der Ansprüche 1 bis 3, wobei die Kontaktoberfläche wenigstens drei punktuelle Vorsprünge auf beiden Seiten der Achse der Dichtungsebene (T) aufweist.

5. Ringförmige Dichtung nach einem der Ansprüche 1 bis 4, wobei die punktuellen Vorsprünge in einer orthogonalen Protektion auf die Dichtungsebene (T) gesehen bezüglich der Dichtung hervorstechen.

6. Ringförmige Dichtung nach einem der Ansprüche 1 bis 5, wobei die Kontaktoberfläche drei Zonen umfasst:
• eine "äußere Zone" genannte Zone, welche bezüglich der Dichtung gegenüber der inneren Oberfläche ist und sich über eine Höhe erstreckt, welche zwischen 1/6 und 22/50 der Dicke (E) der Dichtung auf beiden Seiten der Dichtungsebene (T), bevorzugt zwischen 1/5 und 2/5 der Dicke (E) auf beiden Seiten der Dichtungsebene (T), vorteilhafterweise zwischen 1/3 und 2/5 der Dicke (E) auf beiden Seiten der Dichtungsebene (T) enthalten ist.
• zwei "seitliche Zonen" genannte Zonen, welche sich auf beiden Seiten der Dichtungsebene (T) befinden und sich jeweils zwischen der äußeren Zone und der inneren Oberfläche erstrecken,
wobei der Vorsprung oder die Vorsprünge sich auf den seitlichen Zonen befinden.

7. Ringförmige Dichtung nach Anspruch 6, wobei die Vorsprünge senkrecht zu der Dichtungsebene (T) ausgestaltet sind.

8. Ringförmige Dichtung nach einem der Ansprüche 1 bis 7, wobei die innere Oberfläche und die Kontaktoberfläche lubrifiziert sind.

9. Ringförmige Dichtung nach einem der Ansprüche 1 bis 8, wobei die punktuellen Vorsprünge eine Form aufweisen, welche ausgewählt ist aus hemisphärischen, pyramidenartigen, konischen, kegelstumpfartigen oder polyedrischen Formen.

10. Ringförmige Dichtung nach einem der Ansprüche 1 bis 9, welche eine Symmetrie bezüglich der Dichtungsebene (T) aufweist.

11. Form zur Herstellung einer Dichtung, welche eine Dichtungsebene (T) bei halber Dicke und eine Rotationsachse (R) senkrecht zu der Dichtungsebene (T) umfasst und welche aufweist:
• eine "innere Oberfläche" genannte Oberfläche, welche in Richtung der Rotationsachse gewandt ist und sich über eine Höhe (H) erstreckt, welche zwischen 1/6 und 22/50 der Dicke (E) auf beiden Seiten der Dichtungsebene (T) enthalten ist, und
• eine "Kontaktoberfläche" genannte Oberfläche, welche sich über den Rest der Dichtung erstreckt,
**dadurch gekennzeichnet, dass** die Form wenigstens eine erste und eine zweite Matrize umfasst, welche zueinander beweglich sind, umfassend wenigstens einen Hohlraum, welcher derart positioniert ist, dass sich bei Verwendung wenigstens ein punktueller Vorsprung auf der Kontaktfläche der Dichtung befindet.

12. Verwendung von Dichtungen nach einem der Ansprüche I bis 10 mit wenigstens einer Maschine zur automatischen Verteilung von ringförmigen Dichtungen, welche mit wenigstens einem automatischen Verteiler versehen ist.

13. Verfahren zur automatischen Verteilung von ringförmigen Dichtungen im losen Gebinde in einer Maschine, welche mit einem automatischen Verteiler versehen ist, umfassend:
(a) Bereitstellen von ringförmigen Dichtungen eingangsseitig von dem Verteiler; und
(b) Verschieben der ringförmigen Dichtungen in Richtung der Ausgangsseite des Verteilers,
**dadurch gekennzeichnet, dass** der Schritt (a) darin besteht, die ringförmigen Dichtungen nach einem der Ansprüche 1 bis 10 bereitzustellen.

14. Verfahren zur automatischen Verteilung nach dem vorhergehenden Anspruch, wobei der Verteiler ausgewählt ist aus einem Schwerkraftverteiler, einem Vibrationsverteiler, einem Zentrifugalkraftverteiler, einem Bandförderer oder einem Schaufelförderer.

## Claims

1. Annular seal (10) of thickness (E) made from an elastically deformable material, comprising a seal plane (T) at mid-thickness and an axis of revolution (R) perpendicular to the seal plane (T), and having:
• a so-called "inner" surface directed towards the axis of revolution and extending across a height (H) of between 1/6 and 22/50 of the thickness (E) on either side of the seal plane (T), and
• a so-called "contact" surface extending across the rest of the seal, **characterised in that** it comprises at least one local protuberance on the contact surface.

2. Annular seal as claimed in claim 1, wherein the inner surface extends across a height (H) of preferably between 1/5 and 2/5 of the thickness (E) on either side of the seal plane (T), advantageously between 1/3 and 2/5 of the thickness (E) on either side of the seal plane (T).

3. Annular seal as claimed in any one of claims 1 or 2, wherein said at least one protuberance has a height (h) of between 0.2% and 15% of the thickness (E) of the seal, preferably between 0.3% and 10% of the thickness (E) of the seal, advantageously between 0.5% and 5% of the thickness (E) of the seal, typically between 1% and 3% of the thickness (E) of the seal.

4. Annular seal as claimed in any one of claims 1 to 3, wherein the contact surface has at least three local protuberances on either side of the axis of the seal plane (T).

5. Annular seal as claimed in any one of claims 1 to 4, wherein the local protuberances project out from the seal as viewed in a projection orthogonal to the seal plane (T).

6. Annular seal as claimed in any one of claims 1 to 5, wherein the contact surface comprises three areas:
• a so-called "outer" area opposite the inner surface relative to the seal and extending across a height of between 1/6 and 22/50 of the thickness (E) on either side of the seal plane (T), preferably between 1/5 and 2/5 of the thickness (E) on either side of the seal plane (T), advantageously between 1/3 and 2/5 of the thickness (E) on either side of the seal plane (T);
• two so-called "lateral" areas disposed on either side of the seal plane (T) and each extending between the outer area and the inner surface,
the protuberance or protuberances being disposed on the lateral areas.

7. Annular seal as claimed in claim 6, wherein the protuberances are disposed perpendicular to the seal plane (T).

8. Annular seal as claimed in any one of claims 1 to 7, wherein the inner surface and the contact surface are lubricated.

9. Annular seal as claimed in any one of claims 1 to 8, wherein the local protuberances have a shape selected from a hemispherical, pyramidal, conical, frustoconical or polyhedral shape.

10. Annular seal as claimed in any one of claims 1 to 9, having a symmetry relative to the seal plane (T).

11. Mould for manufacturing a seal comprising a seal plane (T) at mid-thickness and an axis of revolution (R) perpendicular to the seal plane (T), and having:
• a so-called "inner" surface directed towards the axis of revolution and extending across a height (H) of between 1/6 and 22/50 of the thickness (E) on either side of the seal plane (T), and
• a so-called "contact" surface extending across the rest of the seal, **characterised in that** the mould comprises at least a first and a second die displaceable relative to one another, comprising at least one cavity disposed such that during use, at least one local protuberance is disposed on the contact surface of the seal.

12. Use of seals as claimed in any one of claims 1 to 10 with at least one automatic annular seal dispensing machine equipped with at least one automatic dispenser.

13. Method of automatically dispensing annular seals in bulk in a machine equipped with an automatic dispenser, comprising:
(a) supplying annular seals in bulk upstream of the dispenser; and
(b) conveying the annular seals downstream of the dispenser, **characterised in that** step (a) comprises supplying annular seals as claimed in any one of claims 1 to 10.

14. Automatic dispensing method as claimed in the preceding claim, wherein the dispenser is selected from a gravity dispenser, a vibrating dispenser, a centrifugal force dispenser, a belt conveyor or a bucket conveyor.
